# NEW EUROPEAN PATENT SPECIFICATION

(11) **EP 0 710 023 B2**
(45) Date of publication and mention of the opposition decision: **08.12.2004**
(45) Mention of the grant of the patent: 26.09.2001
(21) Application number: 94116933.6
(22) Date of filing: 26.10.1994
(51) Int. Cl.: H04N 7/087

(54) **Apparatus for the simplified selection of pages of the teletext television service**
Einrichtung zur vereinfachten Auswahl von Seiten eines Fernsehtextdienstes
Dispositif pour la sélection simplifiée des pages d'un service télétexte de télévision

(43) Date of publication of application: 01.05.1996
(73) Proprietor: Società Italiana per lo Sviluppo dell'Elettronica S.I.SV.EL. S.p.A., 10060 None (TO) (IT)
(72) Inventor: Graziani, Daniele, I-48010 Bagnara di Romagna (RA) (IT)
(74) Representative: Eisenführ, Speiser & Partner

(56) References cited:
- EP-A- 0 253 110
- EP-A- 0 290 000
- EP-A- 0 379 713
- EP-A- 0 408 892
- EP-A- 0 494 624
- EP-A- 0 567 185
- DE-A- 3 721 614
- US-A- 4 992 871
- NTZ NACHRICHTENTECHNISCHE ZEITSCHRIFT, vol.42, no.11, November 1989, BERLIN DE 'TOP macht Fernsehtext benutzerfreundlich, pages 724, 726-727'
- NHK LABORATORIES NOTE, no.271, February 1982, TOKYO JP pages 3 - 15 '2. TECHNICAL STANDARDS FOR THE SYSTEM'
- ELECTRONIC COMPONENTS AND APPLICATIONS, vol.10, no.3, 1990, EINDHOVEN NL pages 102 - 120 KINGHORN 'A NEW GENERATION OF WORLD SYSTEM TELETEXT ICs'
- Grundig Bedienungsanleitung zu M70-100 IDTV/NIC, page 21

## Description

The present invention has as its subject an apparatus for the simplified selection of pages of the teletext television service.

It is known the teletext system that allows to reproduce on the picture-tube of a television, equipped with a suitable decoder, a series of information, graphics, tables, timetables, news'or similar being of general interest.

Actually the selection of the desired teletext page is carried out by inputting on a remote control appropriately prearranged the number, usually of three digits, corresponding to the desired page: this means that the remote control must have a series of ten numbered keys from 1 to 10, besides another series of keys for the activation of the various teletext functions.

In relation to the above the user must be materially trained in the use of the specific remote control available and the selection of the page involves a manual inputting operation that requires a certain amount of attention and a considerable amount of time.

The above constitutes a great disadvantage in the practical use of the equipment, especially in the case in which the unit is utilised by occasional users, for example in hotels, communities or similar, where often the problem arises of the necessity to teach the use of the apparatus to people with other languages and habits.

Difficulties in this sense are often verified in the case of old people, children, hospital patients, the handicapped, that refuse to learn the actuation procedure.

It is known from US-A-4 992 871 a method and apparatus for processing identification signals in a teletext signal, wherein the desired teletext page can be selected by searching at least the contents of a selected page for signal sequences representing three digits natural numbers, which sequences are stored as signals assigned to the selected teletext page. This document discloses an apparatus according to the preamble of claim 1.

It is known from EP-A-0 567 185 a teletext decoder which is adapted to check whether a keyword entered by the user occurs in a teletext cycle. The teletext pages with the searched keyword, or their page numbers, are identified and stored for later display or selection. It is further known from EP-A-0 379 713 a video receiver system with a teletext decoder containing non-volatile memory in which it is possible to store with an appropriate procedure a table with list of teletext pages. It is further known from NTZ-Nachrichten Technische Zeitschrift, 1989, Nr. 11 pages 724 to 726 a television receiver for TOP teletext system.

The technical task of the present invention is that of overcoming the cited drawbacks of the known devices, to introduce an apparatus for the selection of pages of the teletext television service that does not necessarily involve the use of a numerical keyboard and results in an immediate and intuitive use.

Within the scope of such a technical task, another aim of the present invention is that of reaching the previous task with a simple structure, of relatively easy practical realisation, of safe use and effective functioning, and also of relatively contained costs.

This task and aims are all reached by an apparatus with the characteristics described in the attached claim 1.

Further characteristics will result in being clear and evident from the detailed description of a preferred embodiment, but not exclusive, of an apparatus for the simplified selection of the pages of the teletext television service according to the invention, illustrated as a nonlimiting example, in the annexed drawings, wherein:
- fig. 1 is the block diagram of the apparatus according to the invention;
- fig. 2 the schematic view of a teletext index page modified by means of the apparatus according to the invention.

With particular reference to such figures with 1 the apparatus for the simplified selection of the pages of the teletext television service according to the invention is indicated as a whole.

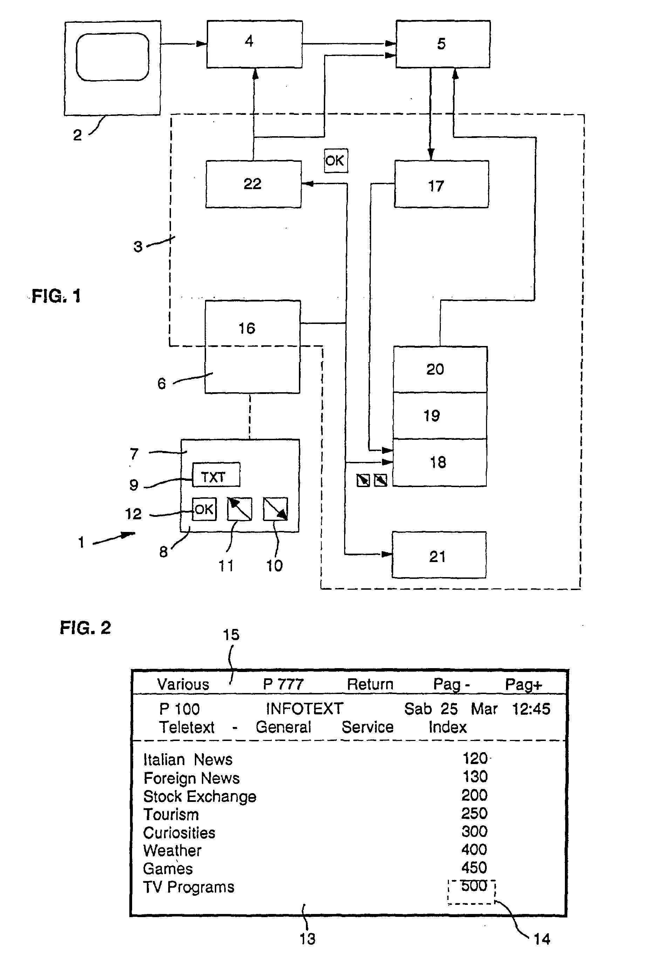

The apparatus 1 is arranged in a television receiver 2 and includes an elaboration group of teletext signals 3 that it is interconnected in a circuitry and operative manner to the known groups present in the television receiver, i.e. a teletext signals decoder 4, a display unit 5 on the screen associated to the television receiver, a memorisation curcuit of the teletext pages and reception 6 of signals coming from the remote control 7: in the block diagram of figure 1 the television receiver is represented as an object being distinct from the apparatus, while in the reality all the apparatus, with exclusion of the remote control, is contained within the television apparatus.

The elaboration group 3 of teletext signals is able to recognise numbers corresponding to the numbers of the pages present in the teletext pages, to manifest them singularly on the screen and actuate them and is able to expose and manifest on the teletext page and to realise a band of operations of recurrent use during the teletext usage.

In a preferred embodiment on the remote control 7 of the television receiver, in a zone 8 dedicated to the teletext actuation, a key 9 is provided for the teletext selection, a key 10 for advancing and a key 11 for returning a distinguishing cursor along numbers corresponding to the pages and along the band of recurrent operations on the modified page that appears on the television screen and a key 12 for actuating the selection distinguished by the cursor: the key 9 is distinguished with Txt, the key 10 with a diagonal descending arrow to the right, the key 11 with an ascending arrow to the left, the key 12 with OK; key 9 may also be able to return from the teletext condition to that of viewing television programs and in such case would additionally have the symbol TV: for returning to the TV condition a separate key can also be provided.

It is to be noted that the keys described have been expressed as an example: it is not to be excluded that only a single advancement key and one of confirmation may be present; for returning to TV viewing a different solution may also be provided, as is so for the teletext selection.

Advantageously the apparatus according to invention modifies the image of the teletext page that appears on the television screen within the terms hereinafter described: a normal teletext page is substantially that represented in figure 2 in the frame 13: the distinguishing cursor is composed of a small flashing or coloured window 14 while the band of recurrent operations may be for example of the type framed in the figure and numbered with 15.

The band 15 advantageously provides the selection of the successive page (Pag+) and of the previous page (Pag-) to that actually shown, the selection of the page selected immediately before that displayed (backward), the selection of the index page (p 100). In addition to these recurrent operations the band 15 can provide optional operations of the type, for example, of the subtitles (p 777), the reset function for the viewing of television programs (TV), various functions, from among which stop, double height, transparency or others.

These recurrent operations are, if provided, actually called upon in the known apparatuses with keys of the remote control where the captions, instructions, may be presented in a single language: with the apparatus according to the invention these operations can easily be illustrated in different languages on the television screen by intervening on the program. The band 15 is displayed horizontally in the upper part or in lower part of the screen and upon initiating the teletext selection the cursor is located in correspondence with the position of Pag+: in the case of the band 15 being above, the position Pag+ is in the upper right hand corner, while in the case of the band being located below, Pag+ will be in the lower left hand corner: this allows an equally rapid access of the selections that can be effected both on the band 15 (horizontally) and vertically.

The page numbers that can be selected are the page numbers written by the television broadcaster within the teletext pages. The system recognises valid page numbers (eliminating character sequences of no significance or not visible) and allows the cursor to be placed over them.

More in particular, it eliminates sequences of four or more numbers, that cannot for definition be teletext pages, it eliminates sequences of numbers containing commas, hyphens and other alphabetic symbols, it does not accepts numbers obtained by combining graphic characters, it requires a double blank space, before and after the triple number that identify the teletext pages, for validating them, etc; many other similar conditions can be listed.

Pressing OK when the cursor is found over a selectable page number the corresponding teletext page is selected. Some operative sequences are hereinafter defined as examples.

The selected page is 100 (index) and the cursor is located on the voice Pag.+. Now intending to select the travel page, the advance key will be pressed several times. The cursor will move on to the selectable page number 120, then 130, then 200, and on the fourth pressure of such key will be located on 250. The selected page indicator will also show 250.

Then pressing OK, the page 250 will be acquired and the process will start from the beginning. Supposing on the other hand that page 105 is desired (not cited in the index). Moving the cursor to Pag+, OK is then pressed until number 105 appears in the selected page indicator. Page 105 will then be selected and the process starts from the beginning.

Figure 1 represents as an example the block diagram of the apparatus wherein: 16 indicates the remote control code recognition, 17 the recognition of valid page numbers to be selected, 18 distinction of desired operation, 9 insertion of Pag+, Pag-, index, 20 insertion of optional functions, 21 eventual commutation to TV or other keys, 22 activation of the effected selection. It is to be noted that in orderto install the apparatus according to the invention in known apparatuses the modifications to actually existing apparatuses are extremely limited.

The apparatus according to the invention involves, if compared to the traditional system, the following advantages: consultation being easier to learn and utilise (it is not necessary to digit the number of the page, but simply a selection operation of a prepared list), avoiding undesired selections due to wrong typing or poor reception of the remote control signal, economic realisation that involves a minor number of keys. The reduction in the number of keys and the learning simplicity reduces the psychological resistance in using teletext and makes the product more marketable, especially for use in hotels, clinics, public premises or similar: apart from this the reduced number of keys and the display on the screen of the possible selections allows use of the apparatus in the dark, such a condition in which traditional apparatuses cannot be easily used.

Advantageously the apparatus according to the invention is compatible with the traditional system, it is therefore possible to realise an apparatus that can support both methods of consultation.

It has thus been seen how the invention reaches the proposed aims. The invention conceived in this way is susceptible of numerous modifications and variations all being within the scope the inventive concept. Furthermore all details may be replaced with others being technically equivalent. In practice the materials used, and also the forms and sizes, can be variable depending on the needs without departing from extent of protection of the following claims.

## Claims

1. Apparatus for the simplified selection of pages of the teletext television service, in a television signal receiver (2),
- comprising a group (3) of circuits for processing a teletext signal received by said television signal receiver (2), wherein said group (3) is able to recognise numbers corresponding to numbers of the pages present on the teletext pages and to show said recognised numbers singularly on a television screen in a modified image of a teletext page, and
- comprising a remote control (7), which comprises a teletext selection button (9), a key for advancing (10) and one for returning (11) a distinguishing cursor (14) along the numbers corresponding to the pages as recognised above, and a key (12) for actuating the selection of a teletext page whose page number is distinguished by said cursor (14),
**characterised in that**
- said apparatus is able to show also on the television screen, together with the above recognised page numbers, a band (15) exposing and manifesting various different operations of recurrent use of the teletext television service on the modified image of said teletext page, wherein
- said distinguishing cursor (14) can be moved by said advancing and returning keys (10, 11) also along said band (15) of exposed and manifested operations to distinguish one of those operations, wherein
- said key (12) for actuating the selection of a teletext page is also used for actuating the selection of the distinguished one operation from the operations as exposed and manifested in said band (15), and wherein
- said operations of recurrent use are horizontally displayed on the upper or lower part of said television screen.

2. Apparatus according to claim 1, **characterised in that** said operations of recurrent use comprise the selection of the successive page and of the previous page to that actually displayed, the selection of the page called upon immediately before that displayed, the selection of the index page.

3. Apparatus according to claim 1, **characterised in that** said operations of recurrent use comprise the subtitles, the resetting function of the display of television programs, various functions, from among which stop, double height, transparency, or others.

4. Apparatus according to claim 1, **characterised in that** said distinguishing cursor is of the flashing or coloured type.

5. Apparatus according to claim 1, **characterised in that** said operations for the users of a language will be illustrated on said television screen **in that** language.

6. Apparatus according to claim 1, **characterised in that** on the remote control the keys relative to teletext are marked respectively with an identifying key of the function teletext (Txt), with a descending diagonal arrow to the right, with an ascending diagonal arrow to the left, with a confirmation key (OK).

7. Apparatus according to claim 1, **characterised in that** said group of circuits for processing the teletext signal is interconnected in a circuitry and operative manner to known groups present in the television receiver of decoding the teletext signals, displaying on the screen and memorising teletext pages and of receiving the signals coming from the remote control.

8. Apparatus according to claim 1, **characterised in that** said group of circuits for processing the teletext signal is able to recognise the numbers corresponding to the numbers of pages present on the teletext pages eliminating the character sequences of no significance or invisible.

9. Television receiver incorporating the apparatus according to one or more of the previous claims.

## Patentansprüche

1. Vorrichtungen für die vereinfachte Auswahl von Seiten des Teletext-Femsehdienstes in einem Femseh-Signalempfänger (2),
- mit einer Gruppe (3) von Schaltungen zum Verarbeiten eines von dem Femseh-Signalempfänger (2) empfangenen Teletext-Signals, wobei die Gruppe (3) in der Lage ist, Zahlen entsprechend der in den Teletext-Seiten vorhandenen Seitenzahlen zu erkennen, sie einzelnen in einer modifizierten Teletext-Seite auf dem Bildschirm zu zeigen und die erkannten Nummern einzeln auf einem Femsehbildschirm in einem modifizierten Bild einer Teletextseite anzuzeigen, und
- mit einer Fernbedienung (7), welche einen Teletext-Auswahlknopf (9) umfasst, eine Taste zum Weiterbewegen (10) und eine zum Zurückbewegen (11) eines unterschiedlichen Cursors (14) entlang der Zahlen entsprechend den wie oben erkannten Seiten, und eine Taste (12) zum Auslösen der Auswahl einer Teletext-Seite, deren Seitennummer durch den Cursor (14) unterschieden wird,
**dadurch gekennzeichnet, dass**
- die Vorrichtung in der Lage ist, auf dem Femsehbildschirm zusammen mit den obigen erkannten Seitennummem auch ein Band (15) anzuzeigen, welches viele verschiedene Operationen gegenwärtiger wiederkehrender Verwendung des Teletext-Femsehdienstes in dem modifizierten Bild der Teletextseite anzeigt und darstellt, wobei
- der unterschiedliche Cursor (14) durch die Tasten (10, 11) zum Weiterbewegen und Zurückbewegen auch entlang des Bandes (15) der angezeigten und dargestellten Operationen bewegt werden kann, um eine dieser Operationen zu unterscheiden, wobei
- die Taste (12) zum Auslösen der Auswahl einer Teletext-Seite ebenfalls zum Auslösen der Auswahl der unterschiedenen Operation aus den Operationen verwendet wird, wie sie in dem Band (15) angezeigt und dargestellt sind, und wobei
- die Operationen wiederkehrender Verwendung in dem oberen oder unteren Teil des Fernsehbildschirms horizontal angezeigt werden.

2. Vorrichtung nach Anspruch 1, **dadurch gekennzeichnet, dass** die wiederholt anwendbaren Vorgänge die Auswahl der nachfolgenden Seite und der vorausgehenden Seite zu der gegenwärtig angezeigten umfassen, die Auswahl der unmittelbar vor der angezeigten aufgerufenen, die Auswahl der Index-Seite.

3. Vorrichtung nach Anspruch 1, **dadurch gekennzeichnet, dass** die wiederholt anwendbaren Vorgänge Untertitel umfassen, die Rücksetz-Funktionen der Anzeige von Femsehprogrammen, verschiedene Funktionen, unter diesen Stopp, doppelte Höhe, Transparenz, oder andere.

4. Vorrichtung nach Anspruch 1, **dadurch gekennzeichnet, dass** der unterschiedliche Cursor vom blinkenden oder farbigen Typ ist.

5. Vorrichtung nach Anspruch 1, **dadurch gekennzeichnet, daß** die Operationen für die Benutzer einer Sprache auf dem Fernsehbildschirm in dieser Sprache illustriert werden.

6. Vorrichtung nach Anspruch 1, **dadurch gekennzeichnet, dass** auf der Fernbedienung die zu Teletext gehörenden Tasten entsprechend mit einem Identifizierungsschlüssel der Funktion Teletext (Txt) markiert sind, mit einem abwärts weisenden diagonalen Pfeil nach rechts, mit einem aufwärts weisenden, diagonalen Pfeil nach links, mit einer Bestätigungstaste (OK).

7. Vorrichtung nach Anspruch 1, **dadurch gekennzeichnet, dass** die Gruppe von Schaltungen zum Verarbeiten des Teletext-Signales in einer Schaltung angeschlossen ist und mit in dem Fernsehempfänger vorhandenen, bekannten Gruppen zusammenwirkt zum Dekodieren der Teletext-Signale, Anzeigen auf dem Bildschirmen und Speichern der Tetetext-Seiten, und zum Empfangen der von der Fernbedienung kommenden Signale.

8. Vorrichtung nach Anspruch 1, **dadurch gekennzeichnet, dass** die Gruppe von Schaltungen zum Verarbeiten des Teletext-Signalas in der Lage ist, die Zahlen entsprechend den auf den Teletext-Seiten vorhandenen Zahlen zu erkennen, unter Beseitigung der Zeichenfolgen, die ohne Signifikanz oder unsichtbar sind.

9. Fernsehempfänger mit der Vorrichtung nach einem oder mehreren der vorstehenden Ansprüche.

## Revendications

1. Dispositif pour la sélection simplifiée de pages du service télétexte par télévision, dans un récepteur (2) de signaux de télévision,
- comprenant un groupe (3) de circuits pour traiter le signal télétexte reçu par ledit récepteur (2) de signaux de télévision, dans lequel ledit groupe (3) est capable de reconnaître les numéros correspondants aux numéros des pages présentes sur les pages télétextes, pour représenter individuellement les numéros reconnus dans une page télétexte modifiée sur l'écran et
- comprenant une télécommande (7), qui comporte un bouton (9) de sélection de télétexte, une touche d'avance (10) et une touche de retour (11), un curseur (14) de repérage parmi les numéros correspondant aux pages telles que reconnues ci-dessus, et une touche (12) pour actionner la sélection d'une page télétexte dont le numéro de page est indiqué par ledit curseur (14),
**caractérisé en ce que**:
- ledit dispositif est capable de représenter également sur l'écran, en même temps que lesdits numéros de page ci-dessus, une bande (15) exposant et manifestant différentes opérations d'usage récurrent du service télétexte par télévision, sur l'image modifiée de ladite page télétexte, dans lequel
- ledit curseur de repérage (14) peut être déplacé par lesdites touches d'avance et de retour (10, 11) également le long de ladite bande (15) d'opérations exposées et manifestées afin d'individualiser l'une desdites opérations, dans lequel
- ladite touche (12) pour actionner la sélection d'une page télétexte est également utilisée pour activer la sélection de l'opération individualisée parmi les opérations exposées et manifestées dans ladite bande (15), et dans lequel
- lesdites opérations d'usage récurrent sont affichées horizontalement sur la partie supérieure ou la partie inférieure de l'écran de télévision.

2. Dispositif selon la revendication 1, **caractérisé en ce que** lesdites opérations d'usage récurrent comprennent la sélection de la page suivante et de la page précédente par rapport à celle qui est en cours d'affichage, la sélection de la page appelée immédiatement avant celle qui est affichée, et la sélection de la page d'index.

3. Dispositif selon la revendication 1, **caractérisé en ce que** lesdites opérations d'usage récurrent comprennent les sous-titres, la fonction de remise à jour de l'affichage des programmes de télévision, des fonctions diverses parmi lesquelles l'arrêt, la hauteur double, la transparence, ou d'autres.

4. Dispositif selon, la revendication 1, **caractérisé en ce que** ledit curseur de repérage est du type clignotant ou coloré.

5. Dispositif selon la revendication 1, **caractérisé en ce que** lesdites opérations pour les utilisateurs d'une langue sont illustrées sur l'écran, associées au récepteur de télévision dans cette langue.

6. Dispositif selon la revendication 1, **caractérisé en ce que**, sur la télécommande, les touches se rapportant au télétexte sont repérées respectivement par une touche d'identification de la fonction télétexte (Txt), par une flèche diagonale descendant vers la droite, par une flèche diagonale montant vers la gauche, et par une touche de confirmation (OK).

7. Dispositif selon la revendication 1, **caractérisé en ce que** ledit groupe de circuits pour traiter le signal télétexte est interconnecté dans un circuit et de façon opératoire à des groupes connus présents dans le récepteur de télévision pour décoder les signaux de télétexte, pour afficher sur l'écran et pour mémoriser les pages télétexte et pour recevoir les signaux venant de la télécommande.

8. Dispositif selon la revendication 1, **caractérisé en ce que** ledit groupe de circuits pour traiter le signal télétexte est capable de reconnaitre les numéros correspondants aux numéros des pages présentes sur les pages télétexte en éliminant les séquences de caractères sans signification ou invisibles.

9. Récepteur de télévision incorporant le dispositif selon l'une ou plusieurs des revendications précédentes.
